# EUROPEAN PATENT APPLICATION

(11) **EP 1 415 838 A1**
(43) Date of publication of application: **06.05.2004**
(21) Application number: 02425653.9
(22) Date of filing: 29.10.2002
(51) Int. Cl.: B60K 6/04

(54) **Electronic control system for torque distribution in hybrid vehicles**

(71) Applicant: STMicroelectronics S.r.l., 20041 Agrate Brianza MI (IT)
(72) Inventor: Esposito Corcione, Giuseppe, 80034 Marigliano (Napoli) (IT); Vitale, Gianluca, 73010 Guagnano (Lecce) (IT); Rizzotto, Gianguido, 20041 Agrate Brianza (Milano) (IT)
(74) Representative: Botti, Mario

(57) **Abstract**

The invention relates to an electronic torque control and distribution system (11) for hybrid propulsion vehicles wherein the drive thrust is distributed between an electric engine (3) and an internal combustion engine (1) through a transmission system (2) delivering the torque of both engines (1, 3) to the vehicle wheels, being slaved to a control unit (4). Advantageously, the control system (11) comprises an input signal processor (12) receiving a predetermined number of operation parameters of the vehicle (10) and of the engines (1, 3) allowing the movement thereof and at least a control output for vehicle actuator elements or for the transmission system (2).

## Description

### Field of application

The present invention relates to an electronic torque control and distribution system for hybrid propulsion vehicles.

More specifically, the invention relates to an hybrid propulsion vehicle wherein the drive thrust is distributed between an electric engine and an internal combustion engine through a transmission system delivering the torque of both engines to the vehicle wheels and being slaved to a control unit.

The invention is an improvement of what has been described in the European patent application no. 01830645.6 in the name of the same applicant and which is meant to be incorporated as reference into the present application.

As it is well known, the growing interest shown by the international community for the decrease of air pollutants has led to the issuing of more and more severe regulations concerning automobile vehicle polluting emissions.

In particular, the European Union has envisaged within 2005 severe restrictions on exhaust emissions and fuel consumption of internal combustion engines. The most significant regulations are briefly described hereafter, some of them being already in force, while some others being impending:
- **Euro III (98/69),** vehicles registered as from January 1, 2001 comply with this directive. Besides the problem of pollutant emission, lower than the previous ones, this directive introduces the compulsoriness of an on board auto-diagnostic system OBD (On Board Diagnostic), indicating any malfunction. It is compulsory to do the repair within a determined number of kilometres, otherwise harsh sanctions are applied. These directives, which are valid for petrol cars, will come into force in 2003 for diesel engines.
- **Euro IV (98/68 B),** it will come into force as from January 1, 2005.
- **Euro V (2001/27/EC),** it will come into force as from January 1, 2008.

Vehicle emissions highly depend on the rotational speed due to the engine use; for example when driving in a city, in the country or in a motorway.

In the future, the compliance with said regulations will involve a considerable effort by car producers in developing low-emission vehicles. In this point of view, hybrid propulsion vehicles will play a leading role in consideration of both the more developed technology and the low emissions, but also of the lower consumption.

### Prior art

The prior art already provides some configurations of hybrid propulsion vehicles, i.e. equipped with an electric engine and an internal combustion engine. The two conventional hybrid vehicle configurations are the series configuration and the parallel configuration.

In the series configuration the internal combustion engine runs at a peak efficiency steady state to recharge some storage batteries powering the electric engine. Essentially, the engine operates as a generator set and it is sized according to the drive-demanded average power.

It is evident that this power value is considerably lower than the highest deliverable power; therefore, under such conditions, the internal combustion engine operates at a torque curve point having the highest efficiency and wherein polluting emissions are reduced to a minimum.

In this configuration, the electric machine mounted on board a vehicle runs mainly as an engine and it is caused to run as a generator only during the regenerative braking steps.

The electric machine rating must be equal to the vehicle rating, since the drive-demanded power is supplied only by the electric engine.

The drawbacks of this configuration are represented by the batteries which, having to be sized according to the electric machine rating, will be characterised by considerable dimensions and weights, negatively affecting the vehicle performances.

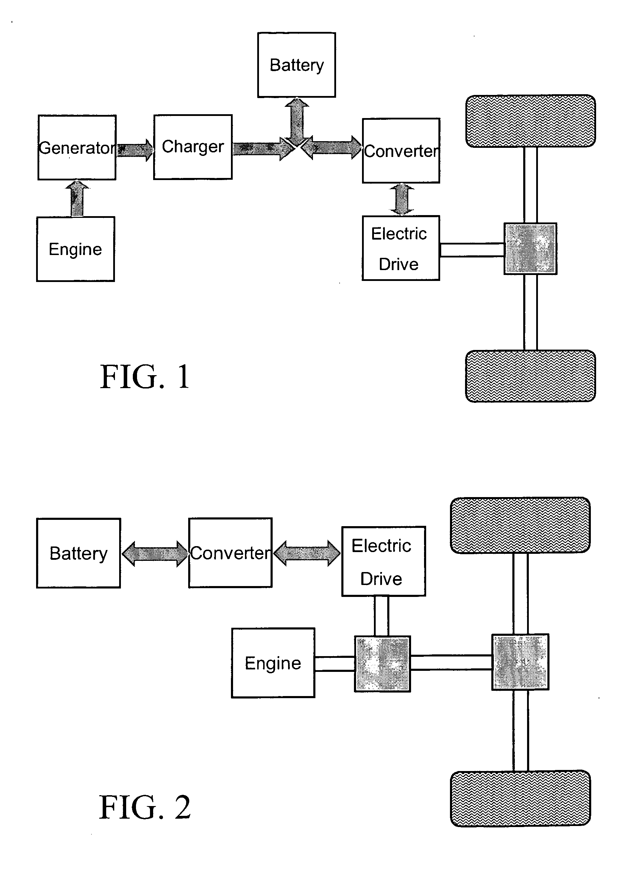

Figure 1 hereattached shows in schematic blocks the structure of an hybrid propulsion vehicle of the previously described series type.

In the parallel configuration the internal combustion engine runs dynamically (not at a fixed point) and it contributes, together with the electric drive, to supply the required mechanical power. Generally, the internal combustion and electric engine contributions are delivered to the wheel axis through a torque conversion mechanical coupling.

The total vehicle power is thus distributed between the electric engine and the internal combustion engine; therefore the latter power is lower than the one of a conventional vehicle engine, in consideration also of the possible electric machine overload.

The efficiency and the polluting emissions are optimised through an adequate control of the radiant flux distribution among the main components. The electric engine has a limited power and it operates also as a generator to recharge the batteries. The batteries have reduced weight and dimensions since they power a reduced power electric engine.

Figure 2 hereattached shows in schematic blocks the structure of a parallel-type hybrid propulsion vehicle.

Both above-described series/parallel configurations have advantages and disadvantages.

In the series-configuration hybrid system the internal combustion engine only functions for the battery charge, therefore the high energy density of fossil fuels cannot be exploited. Moreover, the high weight of storage batteries causes a considerable increase in the vehicle inertia and it damages the equal-power performances.

Also, the need to use two different electric machines, the one for the drive and the other for the storage battery recharge, increases the system complexity to the detriment of the reliability.

On the contrary, the parallel-configuration hybrid system requires controllers or mechanical elements allowing the overall torque required to be distributed between the thermal engine and the electric engine.

The torque distribution methods according to the prior art do not ensure a global optimisation of radiant fluxes but only an optimisation linked to contingent situations.

In order to obtain a global optimisation, not only the path that will be covered by the vehicle but also all the driving conditions that will appear should be previously known in principle.

Another possible solution should be to make forecasts based on the past system history with probabilistic behaviour evaluations. Nevertheless, this solution is of difficult implementation and it would not lead to particularly interesting results from an industrial point of view.

The technical problem underlying the present invention is to provide an electronic torque control and distribution system, particularly for hybrid propulsion vehicles, having such structural and functional characteristics as to overcome the limits of the solutions provided at present by the prior art and to allow.

### Summary of the invention

The solutive idea underlying the present invention is to manage in an innovative way the radiant fluxes used for the propulsion of hybrid vehicles and calculate the torque contributions of the two drive engines, the internal combustion engine and the electric engine, according to a predetermined number of operation parameters both of the vehicle and of the engines allowing the movement thereof.

Advantageously, the system according to the invention partially operates with predictive methods taking also into consideration some "historical" data related to the operation of the vehicle and of the engines allowing the movement thereof.

Based on this solutive idea the technical problem is solved by an electronic torque control and distribution system for hybrid propulsion vehicles as previously described and defined by the characterising part of claim 1.

The features and advantages of the torque control and distribution system according to the invention will be apparent from the following description of an embodiment thereof given by way of non-limiting example with reference to the attached drawings.

### Brief description of the drawings

In the drawings:
- Figure 1: is a schematic view of a vehicle equipped with a series-configuration hybrid propulsion system;
- Figure 2: is a schematic view of a vehicle equipped with a parallel-configuration hybrid propulsion system;
- Figure 3: is a schematic view of a vehicle equipped with a parallel-configuration hybrid propulsion system to which the present invention is preferably applied;
- Figure 4: is a perspective and schematic view of the vehicle of figure 3;
- Figure 5: is a schematic view of the torque control and distribution system according to the invention;
- Figure 6: is a schematic block view of a detail of the system of figure 5;
- Figure 7: is a schematic block view of a further detail of the system of figure 5;
- Figure 8: shows in a torque to time diagram an example of the hybrid propulsion system operation according to the invention.

### Detailed description

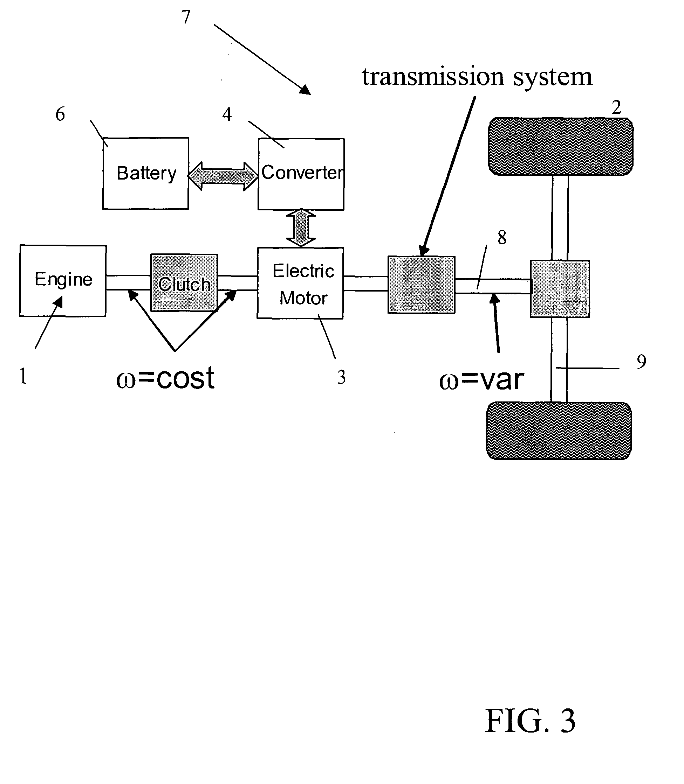

With reference to the drawings, and particularly to the example of Figure 3, a vehicle 10 equipped with a parallel-configuration hybrid propulsion system 7 is described hereafter. The vehicle 10 is preferably used to apply the torque control and distribution system 11 realised according to the present invention.

Advantageously, according to the invention, the hybrid configuration of figure 3 is capable of combining the advantages of the two main types (series and parallel) of hybrid vehicle, due to an innovative management of radiant fluxes.

From a classification point of view, the configuration according to the present invention can be incorporated in the parallel hybrid system types, in terms both of performances and of dimensions.

In fact, as shown in the scheme of figure 2, the vehicle 10 comprises an electric engine 3 which is drive-assisted by an internal combustion engine 1.

The internal combustion engine 1 is fuel-fed by a tank 5 conventionally provided in the vehicle 1.

Similarly, the electric engine 3 is powered by storage batteries 6.

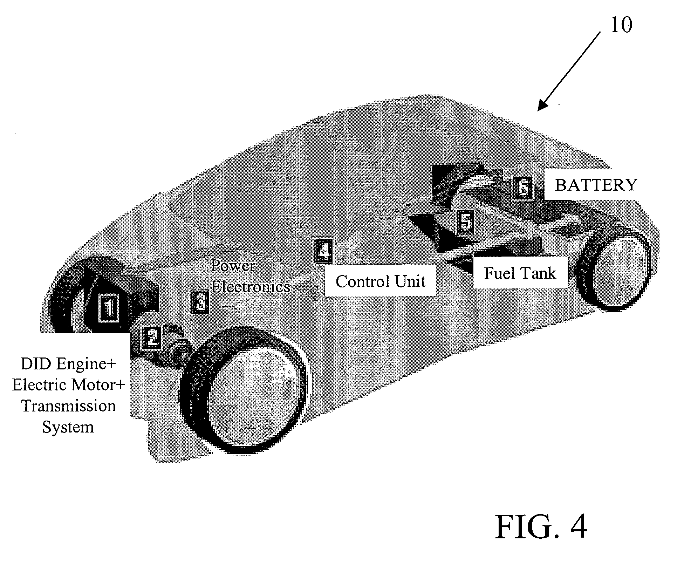

In figure 4 the tank 5 and the batteries 6 are positioned in correspondence with the vehicle 10 rear axle. Obviously, this positioning is a simple indicative and non-limiting example of the applicant's rights.

Similarly, the engine 1 and the electric engine 3 are shown in correspondence with the vehicle 10 forecarriage but this is not a limitation. However this arrangement has been preferred to ensure a good balance of the masses incorporated in the vehicle 10.

Advantageously, according to the invention, the internal combustion engine 1 is sized on a power value lower than the known parallel hybrid systems.

This reduced dimension also concerns the storage batteries 6, causing thus a reduction in the vehicle 10 mass, to the performance advantage.

In conventional parallel configurations, the combustion engine has a variable operating condition strictly linked to the driving dynamics, thus negatively affecting the consumption and emission levels.

On the contrary, this problem cannot be noticed in the series configuration and it is solved by using the steady (angular and torque) state internal combustion engine, at an operation point having the highest efficiency and wherein the consumption and emissions are reduced to a minimum.

Advantageously, in order to obtain high efficiency and high torque at low speed, the choice of the engine 4 rests on a common-rail diesel engine associated to an electronic control unit 4 adjusting the injection thereof, as described in the applicant's European patent application no. 01830645.6. Other types of internal combustion engine can however be used for the purposes of the invention.

In order to couple the axis 8 of the angular steady state engine 1 with the wheel axis 9, having instead a variable angular speed according to driving conditions, it has been performed through a continuously variable reduction ratio transmission system or group 2.

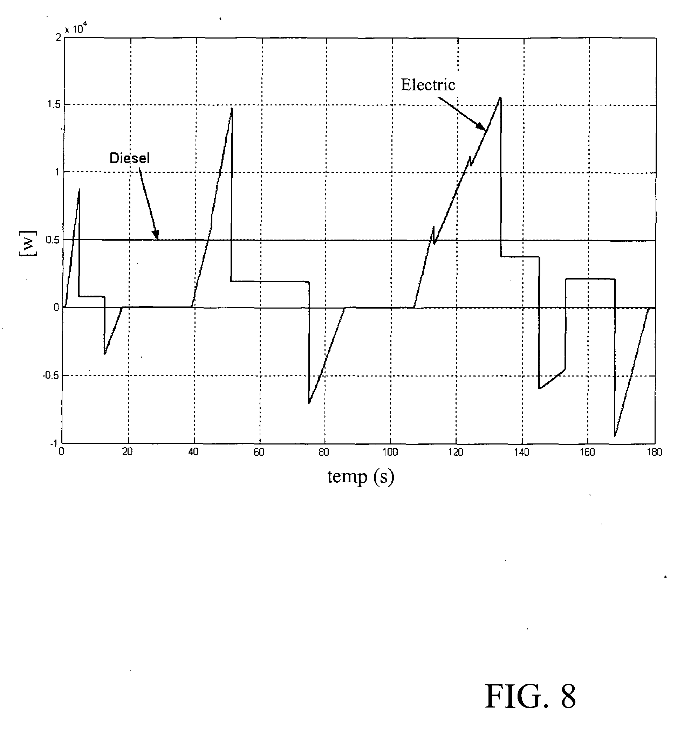

The diesel engine 1 delivers, therefore, a constant power, adjusted to a driver-demanded average power. Figure 8 clearly shows how the diesel engine 1 torque is always steady, while the electric engine contribution varies according to necessity. The torque conversion is defined and determined by the control system 11 according to the invention which is incorporated in the control unit 4 and drives the transmission system 2.

As it will be seen in greater detail hereafter, the control unit 4 manages the operation as a generator or as a draft gear of the internal combustion engine 1, depending on whether the required mechanical power is lower or higher than the power delivered by the diesel engine 1. The control unit 4 also controls the power fluxes to be distributed among the main components (electric machine, diesel engine and storage batteries) in order to optimise the overall energetic efficiency of the whole system.

The structure of the transmission system 2 will now be briefly examined.

The transmission system 2 comprises a continuously variable reduction ratio coupling, called *continuously variable.* The continuously variable transmission is definitely less complex than a traditional automatic transmission equipped with a torque converter.

The system 2 delivers the torque through a converter comprising a segmented steel belt connecting the engine to the transmission by rotating on expanding pulleys.

The ratios change according to the changes imposed to the pulley diameter by an hydraulic system associated thereto. The control of this transmission is entirely electronic and allows, therefore, the engine speed to be kept steady, when the wheel speed is variable.

As already mentioned, according to the invention the torque control and distribution system 11 is incorporated in the control unit 4.

This control system 11 being provided allows the advantages of the two main types of hybrid vehicle, series and parallel, to be combined, thanks to an innovative management of radiant fluxes.

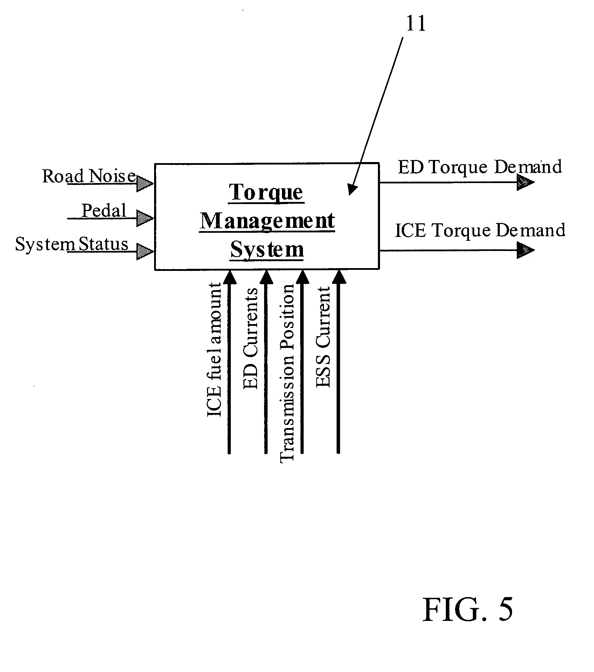

The control system 11 represented in figure 5 is based on soft computing techniques and it processes the electric signals received on the following inputs:
- Path altimetric profile (road noise);
- Driving commands (pedals);
- System component status (system status);
- Fuel mass capacity (**ICE** fuel amount);
- Electric drive phase currents (**ED** currents);
- Battery-supplied current (**ESS** currents);
- Transmission system status (Transmission position);

Therefore, the control system 11 calculates the torque contributions of the two engines 1 and 3 taking into account said inputs and obtaining at the same time the following parametric information:
1. System status
2. External requests
3. Noises
wherefrom it is possible to obtain an estimate allowing the operation of the system 11 itself to be optimised.

It is important to underline that the system 11 operates also in a predictive way since the estimates are performed by monitoring the present system status but also by interpreting the past history thereof.

This is possible due to the presence in the system 11 of a processor incorporating a fuzzy-logic-operating controller 12. The peculiar structure of fuzzy logic processors, which incorporate a non volatile memory comprising data and references to the processing already performed, allows estimate curves of the electric signals needed to drive the hybrid propulsion system to be obtained.

In other words, with the system 11 it is possible to predict the driving style by interpreting at predetermined time intervals the driving cycle already covered.

By way of simple embodiment, a possible real situation which might happen in using the above-mentioned vehicle 10 will be analysed hereafter. In this example the control is applied to the parallel-configuration hybrid vehicle 10 wherein the torque to be delivered by the electric machine is obtained by the driver-demanded torque less the diesel engine torque.

The control system 11 core is the management of the torque delivered by the internal combustion engine 1. In this example a fuzzy-type controller 12 is used, for example of the type commercially known as WARP III, whose inputs are the battery state-of-charge (soc) and the index cycle, indicating a path calculated by the average and the variance of the vehicle speed.

The variable cycle is recalculated at each predetermined time interval t. Moreover, a further variable time makes the output change slow at will.

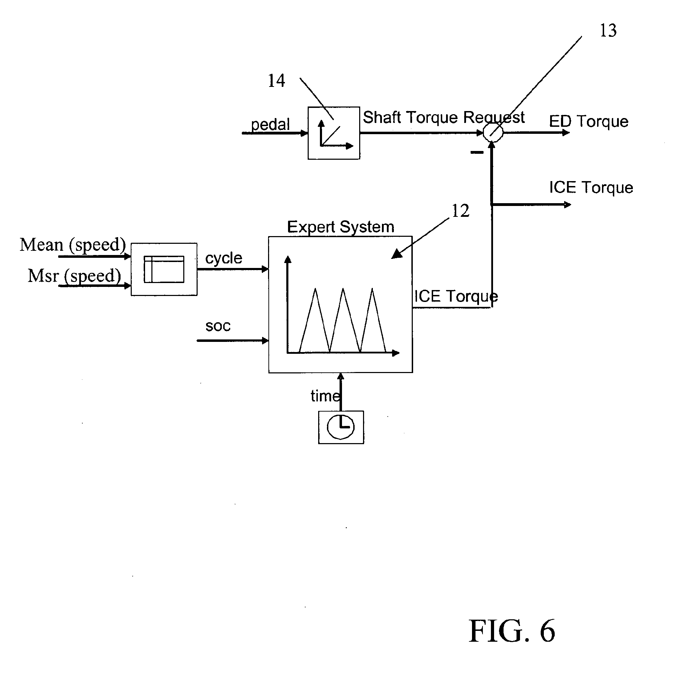

Figure 6 schematically shows the input signal processor incorporating the controller 12 with the relevant inputs and the output addressed to an adder node 13, the output of a processing block 14 of the signal coming from the accelerator pedal also converging thereto.

As it is well known, the fuzzy controller 12 operates on so-called membership functions associated to the inputs. The fuzzy interference rules which can be applied by way of example to said membership functions are schematised hereafter:
1. if (*cycle* is **off**) and (*soc* is not **soc_low)** then (*Tice* is **0**) (*time* is **0**)
2. if (*cycle* is **urban**) and (*soc* is not **soc_low)** then (*Tice* is **0**) (*time* is **1**)
3. if (*cycle* is **comb**) and (*soc* is not **soc_low)** then (*Tice* is **50**) (*time* is **1**)
4. if (*cycle* is **extra**) and (*soc* is not **soc_low)** then (*Tice* is **50**) (*time* is **1**)
5. if (*soc* is **soc_low)** then (*Tice* is **100**) (*time* is **0**)

In this embodiment, the diesel engine 1 runs at a fixed speed and the power delivered therefrom is steady.

The control system 11 acts therefore so that the sum of the mechanical power delivered by the diesel engine 1 and the power delivered by the electric engine 3 is always equal to the driver-demanded power.

This means that: if the power delivered by the diesel engine 1 is higher than the required mechanical power, the electric machine 3 will operate as a generator, recovering and storing the excessive power in the batteries 6; if, on the contrary, the diesel engine 1 power is lower than the required power, the electric machine 3 will provide the remaining part consistently with the capacity of the batteries 6.

As far as batteries 6 are concerned, it is worth saying that, not having to play in this parallel hybrid configuration the role of a real energy supply, but rather the role of a buffer in powering the electric engine 3 to reach the drive-requested power peaks, batteries having high specific power values and low specific energy values can be conveniently used. For example, batteries incorporating metallic nickel-hydrides can be suitable to this purpose having low specific power values related to the weight unit. This procedure allows masses to be contained and, accordingly, performances to be improved for the same installed power.

Moreover, it must be taken into account that the internal combustion engine can always be excluded by the vehicle clutch, but also turned off under those conditions not requiring a high average power like for example halt periods at traffic lights or driving in limited traffic urban areas etc. This allows the undesirable fuel consumption to be eliminated and, accordingly, the polluting emissions to be reduced and the overall efficiency to be increased.

Finally it must be underlined that depending on the control system 11 decisions there will be corresponding actions on the vehicle. More particularly, a series of actuators located in correspondence with the vehicle main control elements, like the clutch, the transmission system etc., are slaved to corresponding control system 11 outputs.

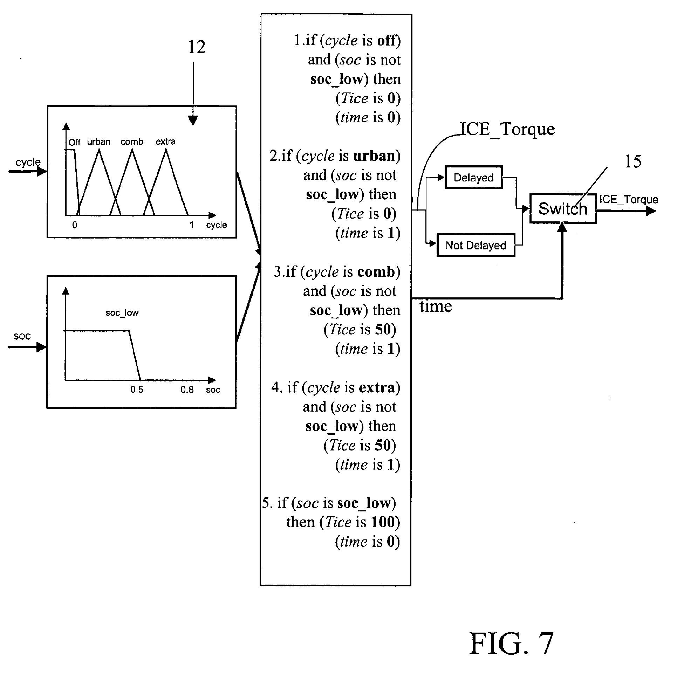

Figure 7 wants to schematise this control possibility by showing how the fuzzy controller 12 is capable to process in fuzzy logic the input signals to output a control signal *ICE_Torque* to be applied to a predetermined actuator of the vehicle 10 through a controlled switch 15.

The presence of the switch 15 allows a predetermined time delay to be applied to the signal *ICE_Torque* according to necessity and in consideration of the timing signal *time.*

For example, if the control system 11 delivers a signal *ICE_Torque=0,* the first macroscopic effect on the vehicle control will be the clutch disengagement and the subsequent decoupling of the internal combustion engine 1.

Moreover, if the variable *time,* which can have logic values 0 and 1, shows that the calculated torque value *ICE_torque* must be imposed to the torque control, or conveniently delayed to avoid abrupt transients, the switch 15 will provide for the switch of the conduction path through which the signal *ICE_torque* passes.

The torque control and distribution system according to the invention, applied to a parallel hybrid configuration, has the great advantage to allow a prediction on the torque distribution with no need to previously know the path and driving condition features.

Moreover, the optimum definition of the torque distribution through soft computing techniques allows the overall system efficiency to be considerably improved and emissions reduced.

## Claims

1. An electronic torque control and distribution system (11) for hybrid propulsion vehicles wherein the drive thrust is distributed between an electric engine (3) and an internal combustion engine (1) through a transmission system (2) delivering the torque of both engines (1, 3) to the vehicle wheels, being slaved to a control unit (4), **characterised in that** it comprises an input signal processor (12) receiving a predetermined number of operation parameters of the vehicle (10) and of the engines (1, 3) allowing the movement thereof and at least a control output for said transmission system (2).

2. A system according to claim 1, **characterised in that** the internal combustion engine (1) operates at steady state and the possible supplementary torque needed is drawn from the electric engine (3).

3. A system according to claim 1, **characterised in that** the sum of the power delivered by the internal combustion engine (1) and the power delivered by the electric engine (3) is always equal to the vehicle-driver-demanded power.

4. A system according to claim 1, **characterised in that** said processor comprises a fuzzy-type controller (12) receiving as inputs at least a state-of-charge (soc) signal of the batteries (6) powering the electric engine (3) and a signal (cycle), indicating a path calculated by the average and the variance of the vehicle speed.

5. A system according to claim 4, **characterised in that** said path signal (cycle) is recalculated at predetermined time intervals (t).

6. A system according to claim 4, **characterised in that** said controller operates on membership functions according to the following fuzzy interference rules:
A) if (*cycle* is **off**) and (*soc* is not **soc_low)** then (*Tice* is **0**) (*time* is **0**)
B) if (*cycle* is **urban**) and (*soc* is not **soc_low)** then (*Tice* is **0**) (*time* is **1**)
C) if (*cycle* is **comb**) and (*soc* is not **soc_low)** then (*Tice* is **50**) (*time* is **1**)
D) if (*cycle* is **extra**) and (*soc* is not **soc_low)** then *(Tice* is **50**) (*time* is **1**)
E) if (*soc* is **soc_low)** then (*Tice* is **100**) (*time* is **0**)

7. A system according to claim 1, **characterised in that** the control output signals of said processor are applied to actuator elements of said vehicle like the clutch or said transmission system (2).

8. A system according to claim 1, **characterised in that** said transmission system (2) has a continuously variable reduction ratio controlled by said control unit (4).

9. A system according to claim 1, **characterised in that** said processor receives the following inputs:
• Path altimetric profile (road noise);
• Driving commands (pedals);
• System component status (system status);
• Fuel mass capacity (ICE fuel amount);
• Electric drive phase currents (ED currents);
• Battery-supplied current (ESS currents);
• Transmission system status (Transmission position);

10. A system according to claim 1, **characterised in that** said control output is delayed by a predetermined time period through a switch (15) driven by a timing signal.
